**Europäisches Patentamt**

**European Patent Office**

**Office européen des brevets**

(11) Veröffentlichungsnummer: **0 347 804**

**A1**

(12) **EUROPÄISCHE PATENTANMELDUNG**

(21) Anmeldenummer: **89111112.2**

(22) Anmeldetag: **19.06.89**

(51) Int. Cl.⁴: **B60K 17/356**

(30) Priorität: **18.06.88 DE 3820717**

(43) Veröffentlichungstag der Anmeldung:
**27.12.89 Patentblatt 89/52**

(84) Benannte Vertragsstaaten:
**ES**

(71) Anmelder: **Goldhofer Fahrzeugwerk GmbH & Co.**
**Donaustrasse 95**
**D-8940 Memmingen(DE)**

(72) Erfinder: **Habernegg, Hans-Jörg, Dipl.-Ing. F.H.**
**Schelmenhofstrasse 30**
**D-8950 Kaufbeuren(DE)**

(74) Vertreter: **Lemke, Jörg-Michael, Dipl.-Ing.**
**Wolframstrasse 9**
**D-8900 Augsburg(DE)**

(54) **Verfahren zur Regelung der Drehzahl eines oder mehrerer Antriebsradsätze eines mit einem hydrostatischen Antrieb ausgerüsteten Fahrzeugs, sowie Vorrichtung zur Ausführung dieses Verfahrens.**

(57) Bei einem Verfahren zur Regelung der Drehzahl eines oder mehrerer Antriebsradsätze ein es mit einem hydrostatischen Antrieb ausgerüsteten Fahrzeugs, dessen Fahrgeschwindigkeit durch die Leistungsregelung einer Verbrennungskraftmaschine oder dergleichen vorgegeben wird, insbesondere eines Schwerlast-Fahrzeugverbunds, wird der für den jeweiligen Antriebsradsatz erforderliche Mengenstrom an Hydraulikflüssigkeit in Abhängigkeit von der jeweiligen Fahrgeschwindigkeit errechnet und diesem Antriebsradsatz zugeführt, wobei die Drehzahl dieses Antriebsradsatzes der jeweiligen Fahrgeschwindigkeit entspricht oder um einen bestimmten Wert größer oder kleiner ist. Zweckmäßig wird die Drehzahl des Antriebsradsatzes um etwa 10 % größer gewählt, als es der jeweiligen Fahrgeschwindigkeit entspricht. Dadurch wird eine besonders gute Traktion ohne unzulässigen Reifenverschleiß erzielt. Im Bedarfsfall werden bei der Errechnung der Mengenströme für die einzelnen Radsätze die jeweiligen Lenkwinkel derselben zusätzlich berücksichtigt.

Fig 1

## Verfahren zur Regelung der Drehzahl eines oder mehrerer Antriebsradsätze eines mit einem hydrostatischen Antrieb ausgerüsteten Fahrzeugs, sowie Vorrichtung zur Ausführung dieses Verfahrens

Die Erfindung betrifft ein Verfahren zur Regelung der Drehzahl eines oder mehrerer Antriebsradsätze eines mit einem hydrostatischen Antrieb ausgerüsteten Fahrzeugs, dessen Fahrgeschwindigkeit durch die Leistungsregelung einer Verbrennungskraftmaschine oder dergleichen vorgegeben wird, insbesondere eines Schwerlast-Fahrzeugverbunds, sowie eine Vorrichtung zur Ausführung dieses Verfahrens. Dabei handelt es sich vornehmlich um auf einer Vielzahl von Achsen oder Radgruppen abgestützte, lenkfähige Tieflader- bzw. Plattformfahrzeuge mit zumindest teilweise antreibbaren Achsen oder Radgruppen, bei welchen ein Dieselmotor durch die Stellung seines Gaspedals die Fahrgeschwindigkeit vorgibt und eine Hydraulikpumpe zur Förderung von Hydraulikflüssigkeit zu Hydraulikmotoren eines oder mehrerer Antriebsradsätze über vorgeschaltete Ventile antreibt.

Bei einem bekannten Verfahren nebst Vorrichtung dieser Art (DE-GM 81 05 977) werden Mengenbegrenzungsventile verwendet, die die Menge der einem Hydraulikmotor zugeführten Hydraulikflüssigkeit auf einen bestimmten Wert begrenzen, der wiederum einer bestimmten Raddrehzahl entspricht. Verliert nun dieses Rad die Bodenhaftung, kann es deshalb zwar noch nicht überdrehen, doch führt insbesondere dann, wenn das Fahrzeug langsam fährt, die vorhandene Reibung innerhalb kurzer Zeit zu sehr starkem Abrieb bzw. sogar zur Entzündung. Sorgt das Mengenbegrenzungsventil beispielsweise für eine maximale Raddrehzahl, die 20 Stundenkilometern entspricht, fährt das Fahrzeug jedoch nur mit 10 Stundenkilometern, dann wird deutlich, daß gerade bei geringen Geschwindigkeiten und den damit bei hydrostatischen Antrieben verbundenen großen Drehmomenten die Gefahr von Reifenschäden an demjenigen Rad gegeben ist, das auch nur kurzfristig eine ausreichende Bodenhaftung verliert. Abgesehen davon sind diese bekannten Mengenbegrenzungsventile sehr anfällig gegen Verschmutzung und damit Verstopfung, so daß sie häufiger ausfallen. Zu ergänzen ist, daß bei langen bzw. vielachsigen Fahrzeugen, wie sie gegebenenfalls aus Einzelfahrzeugen kombinierbar sind, das Geschwindigkeitsproblem verstärkt an den mittleren und damit kurveninnersten Rädern auftritt, also dort, wo sich das Fahrzeug zwangsläufig langsamer bewegt als seine übrigen Bereiche.

Die der Erfindung zugrunde liegende Aufgabe wird darin gesehen, ein Verfahren nebst Vorrichtung der eingangs genannten Art zu schaffen, durch welche unter Vermeidung der genannten Nachteile eine Regelung jedes einzelnen Antriebsradsatzes nach einem variablen Drehzahl-Sollwert und nicht mehr nach einem festen, unveränderbar vorgegebenen Drehzahl-Maximalwert möglich ist.

Diese Aufgabe wird nach der Erfindung verfahrensmäßig dadurch gelöst, daß der für den jeweiligen Antriebsradsatz erforderliche Mengenstrom an Hydraulikflüssigkeit in Abhängigkeit von der jeweiligen Fahrgeschwindigkeit errechnet und diesem Antriebsradsatz zugeführt wird, wobei die Drehzahl dieses Antriebsradsatzes der jeweiligen Fahrgeschwindigkeit entspricht oder um einen bestimmten Wert größer oder kleiner ist.

Vorrichtungsmäßig wird diese Aufgabe nach der Erfindung gelöst durch einen Sensor-Geber zur Feststellung der Fahrgeschwindigkeit, durch eine zentrale Rechnereinheit und erforderlichenfalls durch einen nachgeschalteten Verstärker, sowie dadurch, daß die Ventile solenoidgesteuerte Proportionalventile und jeweils mit von der Rechnereinheit unter Berücksichtigung der Fahrgeschwindigkeit programmabhängig errechneten Steuersignalen beaufschlagbar sind.

Die Funktion ist wie folgt:
Die Fahrgeschwindigkeit wird mittels eines entsprechenden Reglers, im Falle eines Dieselmotors durch das Gaspedal, zur Steuerung der Drehzahl vorgegeben. Der Sensor-Geber, der vorzugsweise nach dem Radar-Dopplerprinzip arbeitet, mißt die tatsächliche Fahrgeschwindigkeit über Grund und gibt diese an die zentrale Rechnereinheit (CPU) weiter, die für jeden einzelnen Antriebsradsatz programmabhängig Steuersignale errechnet und an die Proportionalventile weitergibt, welche Steuersignale den aktuellen Soll-Drehzahlen des jeweiligen Antriebsradsatzes entsprechen, und zwar erforderlichenfalls über einen zwischen die Rechnereinheit und das jeweilige Solenoid der Proportionalventile geschalteten Verstärker. Da jede Soll-Drehzahl einem bestimmten Schluckvolumen der Hydraulikmotoren, zumeist Radnabenmotoren, entspricht, sorgt das jeweilige, errechnete und gegebenenfalls verstärkte Steuersignal der zentralen Rechnereinheit für eine bestimmte, dieses Schluckvolumen gewährleistende Stellung des Proportionalventils. Vorzugsweise wählt nun die zentrale Rechnereinheit die Drehzahl des Antriebsradsatzes jeweils um etwa 10 % größer, als es der jeweiligen Fahrgeschwindigkeit entspricht. Diese etwa 10 % Schlupf sind zur Erreichung der gewünschten Vortriebskraft auf weichem Untergrund notwendig und erwünscht. Im normalen Fahrzustand (z. B. Asphaltstraße) wird also die der Fahrgeschwindigkeit entsprechende Raddrehzahl mit etwa 10 % zulässigem Schlupf nach oben abgesichert.

Diese Regelung der Drehzahl nach Sollwert und nicht nach Maximalwert erbringt einen bedeutend verminderten Reifenverschleiß.

Es versteht sich, daß bei einem Bremsen die Drehzahl des jeweiligen Antriebsradsatzes kleiner sein wird als der Sollwert, somit eine Absicherung nach unten erfolgen kann.

Der Sensor-Geber zur Ermittlung der Fahrgeschwindigkeit kann auch nach einem anderen Prinzip arbeiten, beispielsweise durch Ermittlung der Drehzahl eines nicht angetriebenen, frei mitlaufenden Rades oder dergleichen.

Gemäß einer bevorzugten Ausgestaltung des Verfahrens werden bei der Errechnung der Mengenströme für die einzelnen Radsätze die jeweiligen Lenkwinkel derselben zusätzlich berücksichtigt. Es versteht sich, daß die Radsätze jeweils am Anfang oder am Ende eines Fahrzeuges größere Lenkwinkel aufweisen als die mittleren Radsätze. Genau in der Mitte eines Fahrzeugs wird der Lenkwinkel gleich Null sein. Durch die Berücksichtigung des Parameters des jeweiligen Lenkwinkels bei der programmabhängigen Errechnung des Mengenstroms für den jeweiligen Radsatz läßt sich der Mengenstrom noch genauer bestimmen. Die jeweiligen Lenkwinkel der Radsätze lassen sich entweder durch den jeweiligen Steuerwinkel des Lenkrades des Fahrzeuges vorgeben, wobei dann das gewählte Rechenprogramm die Lenkwinkel der einzelnen Radsätze errechnen kann, oder die jeweiligen Lenkwinkel der Radsätze werden durch den jeweiligen Steuerwinkel des Lenkrades des Fahrzeuges mechanisch vorgegeben, beispielsweise durch die vorgegebene Kinematik eines dem Lenkrad nachgeordneten Steuergestänges, das die Lenkwinkel der einzelnen Radsätze bestimmt. Diese Lenkwinkel lassen sich dann wiederum durch Sensoren-Geber abtasten oder dergleichen und bei der Errechnung der Mengenströme berücksichtigen.

Eine bevorzugte Vorrichtung zur Ausführung des erfindungsgemäßen Verfahrens mit einer von einem Motor angetriebenen Hydraulikpumpe zur Förderung von Hydraulikflüssigkeit zu Hydraulikmotoren eines oder mehrerer Antriebsradsätze über vorgeschaltete Ventile ist gekennzeichnet durch einen ersten Sensor-Geber zur Feststellung der Fahrgeschwindigkeit, durch mindestens einen zweiten Sensor-Geber zur Feststellung mindestens eines Lenkwinkels, durch eine zentrale Rechnereinheit und erforderlichenfalls durch einen nachgeschalteten Verstärker, sowie dadurch, daß die Ventile solenoidgesteuerte Proportionalventile und jeweils mit von der Rechnereinheit unter Berücksichtigung der Fahrgeschwindigkeit und des bzw. der jeweiligen Lenkwinkel(s) programmabhängig errechneten Steuersignalen beaufschlagbar sind. Lediglich ein zweiter Sensor-Geber ist erforderlich, wenn nur der Lenkwinkel des Steuerrads zu berücksichtigen ist, während die Ermittlung der zugehörigen Lenkwinkel der Antriebsradsätze vom Rechner besorgt wird; mehrere, der Anzahl der Antriebsradsätze entsprechende zweite Sensoren-Geber sind erforderlich, wenn der Lenkwinkel jedes einzelnen Antriebsradsatzes zu bestimmen und in den Rechner einzuspeisen ist.

Es versteht sich, daß erfindungsgemäß die Vorrichtung dann, wenn nach dem erfindungsgemäßen Verfahren die Einspeisung des bzw. der Lenkwinkel(s) nicht erforderlich ist, den bzw. die Sensor-Geber nicht aufzuweisen braucht.

In weiterer Ausgestaltung der der Erfindung zugrunde liegenden Aufgabe soll es möglich sein, zur Erzielung höherer Fahrgeschwindigkeiten einen Antriebsradsatz oder einen Teil der Antriebsradsätze abzuschalten. Dies ist insbesondere auch dort von Bedeutung, wo ein Verbundfahrzeug aus zwei oder mehreren Einzelfahrzeugen kombiniert wird, und zwar unter Anschluß der zusätzlichen Fahrzeugeinheiten an den Antrieb bzw. den Motor und die Pumpe des Mutterfahrzeugs. Es versteht sich, daß dabei die Leistung von Motor und Pumpe, bzw. der zur Verfügung stehende Mengenstrom, unverändert bleibt und somit auf die erhöhte Anzahl von vorhandenen Antriebsradsätzen verteilt werden muß, was zunächst einmal eine verringerte Geschwindigkeit bedeutet. Hier läßt sich jedoch durch gegebenenfalls konsekutives Abschalten von Antriebsradsätzen, was wiederum über die zentrale Rechnereinheit gesteuert werden kann, Abhilfe schaffen, sobald das beim Anfahren erforderliche, höhere Drehmoment nicht mehr benötigt wird und höhere Geschwindigkeiten erreicht werden sollen, die durch Beaufschlagung einer geringeren Anzahl von Antriebsradsätzen mit dem zur Verfügung stehenden Mengenstrom erzielbar sind, wobei die zwangsläufige Verringerung des Drehmoments unbeachtlich wird. Die Verwendung mechanischer Freiläufe ware nicht sinnvoll, da hierdurch ein hydraulisches Bremsen der abgeschalteten Antriebsradsätze bei Bergabfahrt nicht möglich wäre.

Erfindungsgemäß wird nun zur Erzielung höherer Fahrgeschwindigkeiten ein Antriebsradsatz oder ein Teil der Antriebsradsätze abgeschaltet und lediglich für Spül- und Kühlungszwecke mit einem Reststrom kühler Hauptstromflüssigkeit versorgt, wahrend die übrige, für eine im wesentlichen drucklose Rotation der Antriebsradsätze benötigte Menge an Hydraulikflüssigkeit jeweils im Umlauf geführt und lediglich ein dem zugeführten Reststrom entsprechender Abstrom erhitzter Umlaufflüssigkeit abgeführt wird.

Bei Langsamfahrt sollen somit alle Hydraulikmotoren arbeiten, um ein großes Drehmoment und große Zugkraft zu erzielen, während hingegen bei Schnellfahrt in erforderlichem Ausmaß die Abschaltung erfolgt, so daß der gesamte Mengenstrom den Motoren von z. B. lediglich einer Fahrzeugeinheit eines Verbundfahrzeugs zur Verfügung steht.

Vorrichtungsmäßig wird dies nach der Erfindung dadurch gelöst, daß jedes Proportionalventil Teil einer hydraulischen Schaltung zum Beaufschlagen des Hydraulikmotors oder der Hydraulikmotoren des jeweiligen Antriebsradsatzes in beiden Richtungen zur Gewährleistung der gewünschten Betriebszustände unter Einschluß eines Betriebszustandes ist, bei welchem Eingang und Ausgang des Hydraulikmotors zur Erzielung eines drucklosen Umlaufs über entsprechende Ventile kurzgeschlossen sind und nur zu Spül- und Kühlzwecken eine relativ geringe Menge von der Pumpe geförderter und über das Proportionalventil eingespeister Hauptstrom-Hydraulikflüssigkeit zuführbar und eine entsprechende Menge Umlaufstrom-Hydraulikflüssigkeit aus dem Umlauf abführbar ist.

Die Proportionalventile sind zweckmäßigerweise Proportional-Drosselventile mit doppelter Durchströmung. Es sind jedoch auch solche Ventile mit einfacher Durchströmung verwendbar, sofern ein Mengenteiler nachgeschaltet wird. Im üblichen Fall zweier Hydraulikmotoren für den aus zwei Rädern bestehenden Antriebsradsatz einer Achsseite teilt dieser Mengenteiler den Strom des Ventils in zwei Teilströme auf.

Die Erfindung und ihre vorteilhaften Ausgestaltungen sind im folgenden anhand eines in der Zeichnung dargestellten Ausführungsbeispiels näher erläutert.

Es zeigt:

Fig. 1 eine Vorrichtung zur Durchführung des Verfahrens in Form eines Blockschaltbildes für ein Fahrzeug mit drei Fahrachsen und jeweils einem linken und einem rechten Antriebsradsatz mit jeweils zwei Hydraulikmotoren für zwei nichtgezeigte Räder;

Fig. 2 eine hydraulische Schaltung, wie sie für jeden der sechs Antriebsradsätze gemäß Fig. 1 verwendbar ist, in einer Steuerstellung für z.B. Vorwärtsfahrt;

Fig. 3 eine der Fig. 2 entsprechende Schaltung mit einer Steuerstellung für z.B. Rückwärtsfahrt;

Fig. 4 eine den Fig. 2 und 3 entsprechende Schaltung, bei welcher jedweder Antrieb abgeschaltet ist und lediglich ein druckloser Umlauf mit Zuführung von lediglich Kühl- und Spülflüssigkeit mit mengenmäßig entsprechender Abfuhr von erhitzter Umlaufflüssigkeit stattfindet.

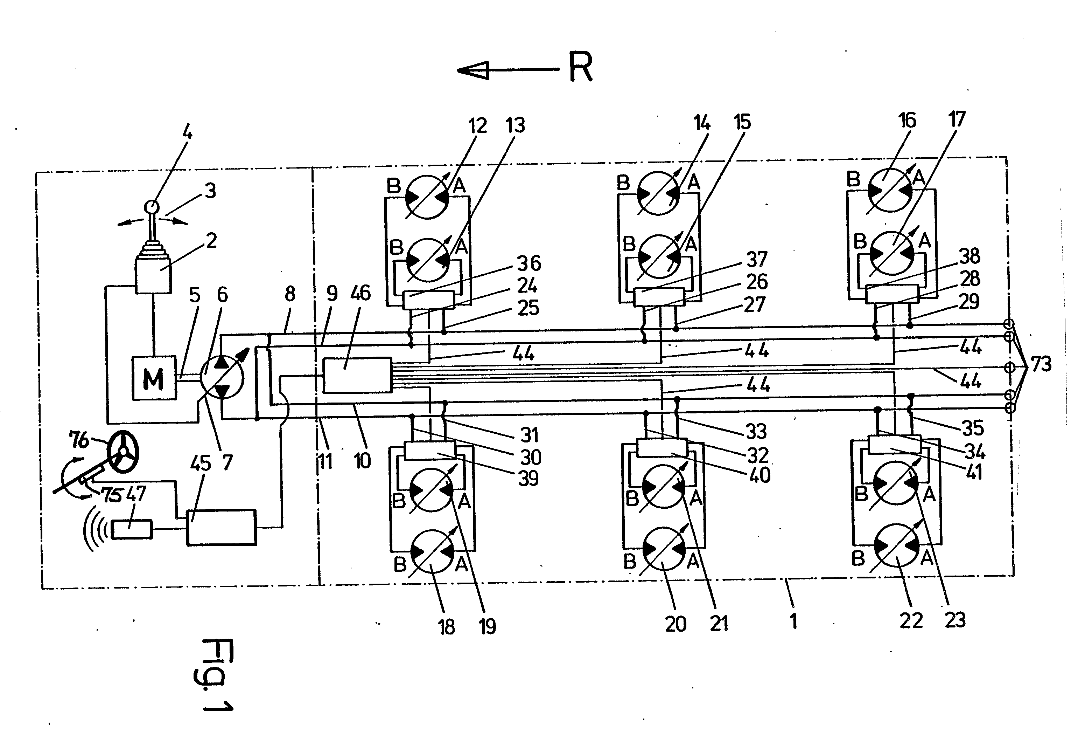

Fig. 1 zeigt strichpunktiert schematisch angedeutet ein Fahrzeug mit einem Motor M, dessen Drehzahl mittels einer Regelung 2 geregelt wird, wie die durch den Doppelpfeil 3 verdeutlichte Bewegung eines Gashebels 4 veranschaulicht.

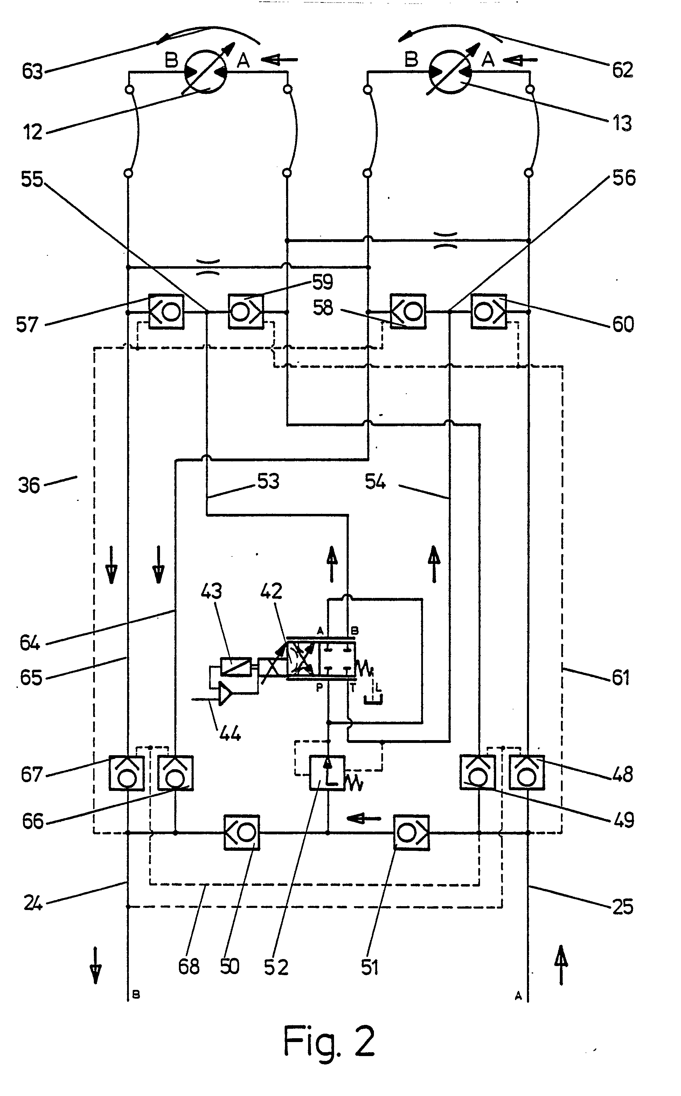

Der Motor M treibt über eine Welle 5 eine Pumpe 6, deren Fördervolumen, wie mit dem Pfeil 7 angedeutet, bezüglich Förderrichtung und -menge regelbar ist. Diese Pumpe 6 liefert Hydraulikflüssigkeit über Hauptleitungen 8, 9 und 10, 11 an die gewöhnlich auf den nichtgezeigten Radnaben sitzenden Antriebsmotoren 12, 13, 14, 15 und 16, 17 der einen Fahrzeugseite, bzw. 18, 19, 20, 21 und 22, 23 der anderen Fahrzeugseite, wobei man die eine Seite auch mit rechts und die andere Seite mit links bezeichnen kann, sofern man die Hauptfahrtrichtung mit der Pfeilrichtung R vorgibt. Wie ersichtlich, besitzt das gezeigte Fahrzeug 1 drei Radachsen und auf jeder Radachse an beiden Seiten des Fahrzeugs je zwei Hydromotoren für den jeweiligen, nichtgezeigten Radsatz. Die Speisung mit Hydraulikflüssigkeit erfolgt über die Hauptleitungen 8, 9 und 10, 11 jeweils über Zweigleitungen 24, 25 und 26, 27 und 28, 29 auf der einen bzw. rechten Seite, sowie Zweigleitungen 30, 31 und 32, 33 und 34, 35 auf der anderen bzw. linken Fahrzeugseite. Die Verteilung auf die jeweiligen Hydromotoren erfolgt wiederum mittels Zweigleitungen über jeweils sogenannte Hydroblöcke 36, 37, 38, 39, 40, 41, die im folgenden anhand der Fig. 2 bis 4 näher erläutert werden. Da sie sämtlich gleich ausgebildet sind, d.h. in allen Fällen die gleiche hydraulische Schaltung verwendet wird, genügt die Erläuterung anhand beispielsweise des Hydroblocks 36 in Fahrtrichtung R vorn rechts.

Daß in Fig. 1 die beiden Hydromotoren 12 und 13 zeichnerisch übereinander, in den Fig. 2 bis 4 hingegen nebeneinander angeordnet sind, ist lediglich darstellungsmäßig bedingt und ansonsten unbeachtlich.

Wie man leicht entnimmt, enthalten alle Hydroblöcke 36 bis 41, stellvertretend der Hydroblock 36, ein Proportional-Drosselventil 42 mit doppelter Durchströmung, das von einem Elektromagneten bzw. einem Solenoid steuerbar ist. Das Solenoid 43 ist wiederum über eine Steuerleitung 44 mit einem Steuersignal beaufschlagbar, das von einer zentralen Rechnereinheit 45 über einen Verstärker 46 zugeführt wird. Der Einfachheit halber ist in Fig. 1 sämtlichen Steuerleitungen das Bezugszeichen 44 zugeordnet, wobei der Übersichtlichkeit halber nur einige Steuerleitungen entsprechend gekennzeichnet wurden. Ein erster Sensor-Geber 47 für die Fahrgeschwindigkeit und zweite, nicht gezeigte Sensoren-Geber für die jeweiligen Lenkwinkel der Antriebsradsätze 12, 13 bzw. 18, 19 und 14, 15 bzw. 20, 21 und 16, 17 bzw. 22, 23 können ihre jeweiligen Werte in die Rechnereinheit 45 einspeisen, die diese Werte zu den genannten Steuersignalen verarbeitet und eine bestimmte Durchlaßstellung des Proportionalventils 42 gewährleistet. Dadurch wird dafür gesorgt, daß der für den jeweiligen Antriebsradsatz, im vorliegenden Falle (Fig. 2 bis 4) für den Antriebsradsatz vorn rechts mit dem Hydroblock 36, erforderliche Mengenstrom an Hydraulikflüssigkeit in Abhängigkeit von der jeweiligen Fahrgeschwindigkeit und dem jeweiligen Lenkwinkel dieses Antriebsradsatzes 12, 13 errechnet und diesem zugeführt wird, wobei die Drehzahl dieses Antriebsradsatzes der jeweiligen Fahrgeschwindigkeit und dem jeweiligen Lenkwinkel entspricht oder um einen bestimmten Wert größer ist, beispielsweise etwa 10 %.

Bei der gezeigten Ausführungsform wird insofern etwas einfacher verfahren, als lediglich ein einziger Sensor-Geber 75 vorgesehen ist, der den Einschlagwinkel des Lenkrades 76 jeweils nach rechts oder links in die Rechnereinheit 45 einspeist, wobei, wie einleitend bereits erläutert, diese Rechnereinheit 45 ein Rechenprogramm besitzt, das den jeweiligen Antriebsradsätzen in Abhängigkeit von dem seitens des Sensor-Gebers 75 eingespeisten Wert die sich jeweils daraus ergebenden Lenkwinkel zuordnet und bei der Berechnung der jeweiligen Mengenströme berücksichtigt.

Die Schaltung der Ventile des Hydroblocks geschieht bei Vorwärtsfahrt bzw. Antrieb von A auf B der Hydromotoren 12, 13 bei Zufuhr bzw. Abfuhr der Hydraulikflüssigkeit entsprechend den gezeigten Pfeilen wie folgt:

Die unter Druck stehende Hydraulikflüssigkeit wird durch die Zweigleitung 25 zugeführt. Die Ventile 48, 49 und 50 sind geschlossen, das Ventil 51 ist geöffnet. Das Proportionalventil 42 wird über eine Druckwaage 52 gespeist. Da es sich um ein Proportional-Drosselventil mit doppelter Durchströmung handelt, steht die Hydraulikflüssigkeit in den Leitungen 53 und 54 an den Verzweigungspunkten 55 und 56 an. Die Ventile 57 und 58 sind geschlossen. Die Ventile 59 und 60 sind durch die Steuerdruckleitung 61 in Offenstellung gesteuert. Anstelle einer hydraulischen Steuerung läßt sich in allen Fällen auch eine elektrische oder pneumatische Steuerung vorsehen. Die Drehrichtung der beiden Hydromotoren 12 und 13 ergibt sich aus den Pfeilen 62 und 63.

Es versteht sich, daß sich mit der vorstehend erläuterten Betriebsstellung des Hydroblocks 36 auch das Bremsen auf B durchführen läßt, und zwar wiederum in Abhängigkeit von der Stellung des Proportional-Drosselventils 42. Die Abfuhr des Öls erfolgt jeweils über die Leitungen 64 und 65 über in Offenstellung gesteuerte Ventile 66 und 67 (Steuerleitung 68) zur Zweigleitung 24.

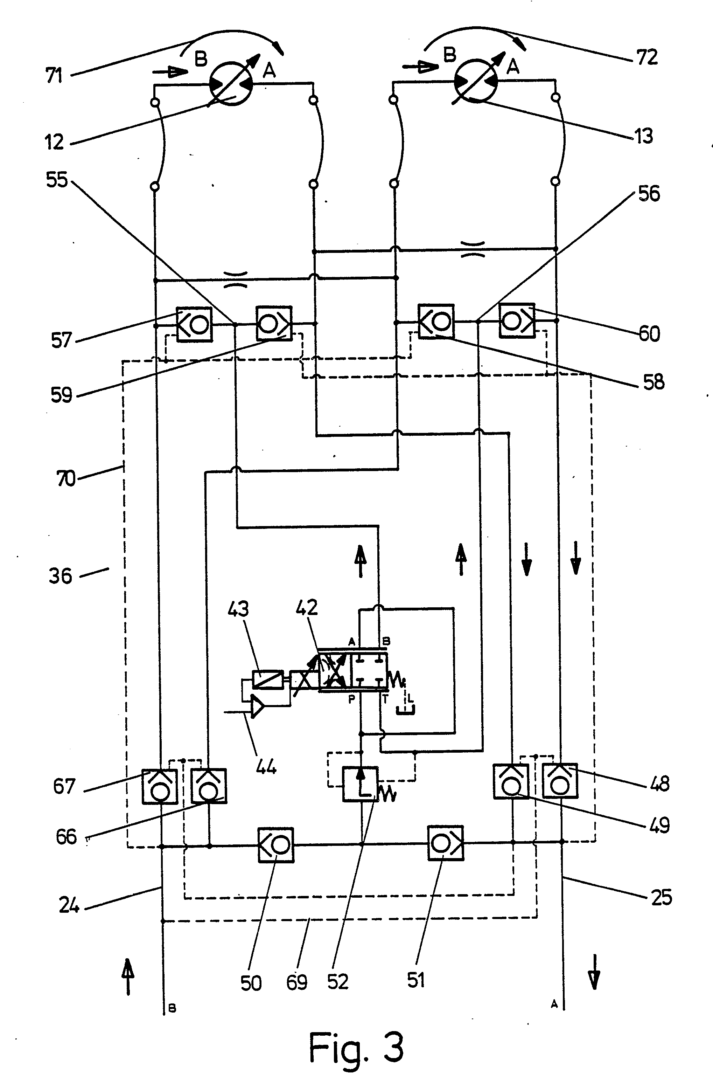

Bei Umkehrung der Förderrichtung der Pumpe 6 (Rückwärtsfahrt) ergibt sich die Betriebsstellung des Hydroblocks 36 gemäß Fig. 3. Die Zufuhr unter Druck stehender Hydraulikflüssigkeit erfolgt über die Zweigleitung 24. Die Ventile 66 und 67 sind geschlossen, die Ventile 48 und 49 über die Steuerleitung 69 geöffnet. Das Ventil 50 ist offen, das Ventil 51 ist geschlossen. Das Proportional-Drosselventil 42 wird in gleicher Weise durchströmt wie bei Vorwärtsfahrt, jedoch sind diesmal die Ventile 57 und 58 über die Steuerleitung 70 geöffnet, die Ventile 59 und 60 hingegen geschlossen. Der Antrieb der Hydraulikmotoren 12 und 13 erfolgt somit von B auf A bzw. es läßt sich ein Bremsen auf A durchführen, jeweils in Abhängigkeit von der Stellung des Proportional-Drosselventils 42, diese wiederum in Abhängigkeit vom jeweiligen, durch die Steuerleitung 44 zugeführten Steuersignal der zentralen Rechnereinheit 45. In diesem Falle ist die Drehrichtung natürlich gegenüber derjenigen nach Fig. 2 umgekehrt in Pfeilrichtung 71, 72.

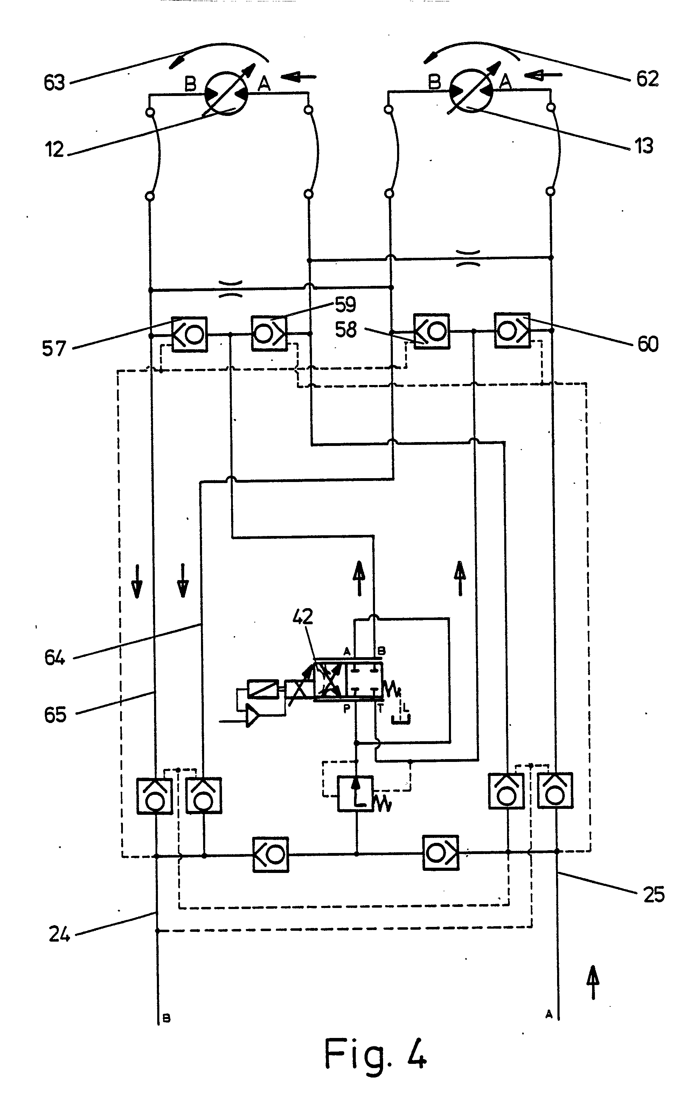

In Fig. 4 ist nun eine erfindungsgemäße Betriebsweise erläutert, bei welcher zur Erzielung höherer Fahrgeschwindigkeiten beispielsweise die Antriebsradsätze der vordersten Achse bzw. die Hydromotoren 12, 13 und 18, 19 abgeschaltet sind und lediglich für Spül- und Kühlungszwecke mit einem Reststrom kühler Hauptstromflüssigkeit versorgt werden, während die übrige, für eine im wesentlichen drucklose Rotation dieser Hydromotoren benötigte Menge an Hydraulikflüssigkeit jeweils im Umlauf geführt und lediglich ein dem zugeführten Reststrom entsprechender Abstrom erhitzter Umlaufflüssigkeit abgeführt wird.

Es handelt sich dabei um eine Vorwärtsfahrt entsprechend Fig. 2 (Antrieb von A auf B), somit ergeben sich gemäß Fig.4 folgende Verhältnisse: Die Betriebsstellung des Hydroblocks 36 (bzw. in diesem Falle auch des Hydroblocks 39) entspricht der Darstellung gemäß Fig. 2 mit Ausnahme der Tatsache, daß auch die Ventile 57 und 58 geöffnet sind und das Proportional-Drosselventil 42 natürlich nur geringfügig geöffnet ist, um nur wenig Hauptstromflüssigkeit entsprechend der benötigten Kühl- bzw. Spülflüssigkeit zuzuführen. Die übrige, der jeweiligen Drehzahl in Abhängigkeit von der Fahrgeschwindigkeit entsprechende Hydraulikflüssigkeit holen sich die Hydromotoren 12 und 13 (bzw. 18, 19) jeweils im Umlauf durch die Ventile 57 und 58. Lediglich die der zugeführten Kühl- und Spülflüssigkeit entsprechende Menge wird über die Leitungen 64 und 65 abgeführt.

Ergänzend ist darauf hinzuweisen, daß die in Fig. 1 am hinteren Ende des Fahrzeugs 1 angedeuteten Anschlüsse 73 für die Hauptleitungen 8, 9 und 10, 11 einerseits und Steuerleitung(en) 44 andererseits den Anschluß weiterer Fahrzeugeinheiten zwecks Aufbaus eines Kombinations- bzw. Verbundfahrzeugs ermöglichen, das in seinem hydraulischen Aufbau entsprechend ausgebildet ist und dessen Hydromotoren in gleicher Weise von der zentralen Rechnereinheit über entsprechende Hydroblöcke ansteuerbar sind und sich zu- und abschalten lassen, je nachdem, ob Langsamfahrt mit hohen Drehmomenten oder Schnellfahrt angesagt sind. Es versteht sich auch, daß diese Anschlüsse nicht unbedingt am hinteren Ende des Fahrzeugs 1, vielmehr auch an den Seiten vorgesehen sein können, um Verbundsysteme in Querrichtung zu bilden, wobei sich das Programm der zentralen Rechnereinheit 45 entsprechend ausgestalten läßt.

## Ansprüche

1. Verfahren zur Regelung der Drehzahl eines oder mehrerer Antriebsradsätze eines mit einem hydrostatischen Antrieb ausgerüsteten Fahrzeugs, dessen Fahrgeschwindigkeit durch die Leistungsregelung einer Verbrennungskraftmaschine oder dergleichen vorgegeben wird, insbesondere eines Schwerlast-Fahrzeugverbunds, **dadurch gekennzeichnet,** daß der für den jeweiligen Antriebsradsatz erforderliche Mengenstrom an Hydraulikflüssigkeit in Abhängigkeit von der jeweiligen Fahrgeschwindigkeit errechnet und diesem Antriebsradsatz zugeführt wird, wobei die Drehzahl dieses Antriebsradsatzes der jeweiligen Fahrgeschwindigkeit entspricht oder um einen bestimmten Wert größer oder kleiner ist.

2. Verfahren nach Anspruch 1, **dadurch gekennzeichnet,** daß die Drehzahl des Antriebsradsatzes um etwa 10 % größer gewählt wird, als es der jeweiligen Fahrgeschwindigkeit entspricht.

3. Verfahren nach Anspruch 1, **dadurch gekennzeichnet,** daß bei der Errechnung der Mengenströme für die einzelnen Radsätze die jeweiligen Lenkwinkel derselben zusätzlich berücksichtigt werden.

4. Verfahren nach Anspruch 2 oder 3, **dadurch gekennzeichnet,** daß die jeweiligen Lenkwinkel der Radsätze durch den jeweiligen Steuerwinkel des Lenkrades des Fahrzeugs mechanisch vorgegeben werden.

5. Verfahren nach Anspruch 4, **dadurch gekennzeichnet,** daß die jeweiligen Lenkwinkel nach Maßgabe des Steuerwinkels des Lenkrades programmabhängig ermittelt werden.

6. Verfahren nach Anspruch 1, 2 oder 3, **dadurch gekennzeichnet,** daß zur Erzielung höherer Fahrgeschwindigkeiten ein Antriebsradsatz oder ein Teil der Antriebsradsätze abgeschaltet und lediglich für Spül- und Kühlungszwecke mit einem Reststrom kühler Hauptstromflüssigkeit versorgt wird, während die übrige, für eine im wesentlichen drucklose Rotation der Antriebsradsätze benötigte Menge an Hydraulikflüssigkeit jeweils im Umlauf geführt und lediglich ein dem zugeführten Reststrom entsprechender Abstrom erhitzter Umlaufflüssigkeit abgeführt wird.

7. Vorrichtung zur Ausführung des Verfahrens nach einem der vorhergehenden Ansprüche mit einer von einem Motor (M) angetriebenen Hydraulikpumpe (6) zur Förderung von Hydraulikflussigkeit zu Hydraulikmotoren (12 bis 23) eines oder mehrerer Antriebsradsätze über vorgeschaltete Ventile (42), **gekennzeichnet** durch einen ersten Sensor-Geber (47) zur Feststellung der Fahrgeschwindigkeit, durch eine zentrale Rechnereinheit (45) und erforderlichenfalls durch einen nachgeschalteten Verstärker (46), sowie dadurch, daß die Ventile (42) solenoidgesteuerte Proportionalventile und jeweils mit von der Rechnereinheit unter Berücksichtigung der Fahrgeschwindigkeit und des bzw. der jeweiligen Lenkwinkel(s) programmabhängig errechneten Steuersignalen beaufschlagbar sind.

8. Vorrichtung nach Anspruch 7, **dadurch gekennzeichnet,** daß mindestens ein zweiter Sensor-Geber zur Feststellung mindestens eines Lenkwinkels vorgesehen ist, dessen Wert bzw. dessen Werte ebenfalls der zentralen Rechner einheit (45) zwecks Berücksichtigung bei der Ermittlung der Steuersignale zuführbar ist bzw. sind.

9. Vorrichtung nach Anspruch 7 oder 8, **dadurch gekennzeichnet,** daß der erste Sensor-Geber (47) ein Radar-Doppler-Geschwindigkeits-Sensor-Geber ist.

10. Vorrichtung nach Anspruch 7, 8 oder 9, **dadurch gekennzeichnet,** daß jedes Proportionalventil (42) Teil einer hydraulischen Schaltung zum Beaufschlagen des Hydraulikmotors oder der Hydraulikmotoren (12 bis 23) des jeweiligen Antriebsradsatzes in beiden Richtungen zur Gewährleistung der gewünschten Betriebszustände unter Einschluß eines Betriebszustandes ist, bei welchem Eingang und Ausgang des Hydraulikmotors zur Erzielung eines drucklosen Umlaufs über entsprechende Ventile (57 bis 60) kurzgeschlossen sind und nur zu Spül- und Kühlzwecken eine relativ geringe Menge von der Pumpe geförderter und über das Proportionalventil (42) eingespeister Hauptstrom-Hydraulikflüssigkeit zuführbar und eine entsprechende Menge Umlaufstrom-Hydraulikflüssigkeit aus dem Umlauf abführbar ist.

11. Vorrichtung nach mindestens einem der Ansprüche 7 bis 10, **dadurch gekennzeichnet,** daß das Proportionalventil ein Proportional-Drosselventil mit doppelter Durchströmung ist.

Fig. 1

Fig. 2

Fig. 3

Fig. 4

Europäisches
Patentamt

EUROPÄISCHER RECHERCHENBERICHT

Nummer der Anmeldung

EP    89 11 1112
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | FR-A-2257454 (BOSCH)<br>* Seite 1, Zeile 1 - Zeile 6 *<br>* Seite 4, Zeile 34 - Seite 6, Zeile 1 *<br>* Figuren 1, 2 * | 1 | B60K17/356 |
| Y | | 2, 3, 4 | |
| A | | 7 | |
| | --- | | |
| Y | US-A-4236595 (BECK U. A.)<br>* Spalte 1, Zeile 60 - Spalte 2, Zeile 59 *<br>* Spalte 4, Zeile 4 - Zeile 39 *<br>* Figur 1 * | 2 | |
| A | | 1, 6, 10 | |
| | --- | | |
| Y | GB-A-2053108 (VAN DER LELY)<br>* Seite 1, Zeile 8 - Zeile 14 *<br>* Seite 4, Zeile 102 - Seite 5, Zeile 9 *<br>* Seite 5, Zeile 55 - Zeile 95 *<br>* Figur 3 * | 3, 4 | |
| A | | 1 | |
| | --- | | |
| A | US-A-4635743 (RIEHL)<br>* Spalte 2, Zeile 23 - Zeile 35 *<br>* Spalte 3, Zeile 12 - Zeile 43 *<br>* Spalte 4, Zeile 9 - Zeile 19 *<br>* Spalte 9, Zeile 47 - Spalte 10, Zeile 12 *<br>* Figur 1 * | 1, 2, 7 | RECHERCHIERTE SACHGEBIETE (Int. Cl.4 )<br><br>B60K |
| | --- | | |
| A | DE-A-3611268 (ABG-WERKE)<br>* das ganze Dokument * | 1, 3, 7 | |
| | --- | | |
| A | US-A-3952511 (TURNER U. A.)<br>* Spalte 1, Zeile 4 - Zeile 12 *<br>* Spalte 3, Zeile 1 - Zeile 27 *<br>* Spalte 7, Zeile 10 - Zeile 25 *<br>* Spalte 7, Zeile 53 - Zeile 62 *<br>* Figur 2 * | 1, 6, 10 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 06 SEPTEMBER 1989 | CLASEN M. P. |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | EP-A-0224144 (OPEL)<br>* Spalte 3, Zeile 42 – Zeile 52 *<br>* Spalte 6, Zeile 14 – Zeile 33 *<br>* Ansprüche 1, 4; Figur 4 *<br>------ | 1, 7 | |

### EINSCHLÄGIGE DOKUMENTE

RECHERCHIERTE SACHGEBIETE (Int. Cl.4 )

Der vorliegende Recherchenbericht wurde für alle Patentansprüche erstellt

| Recherchenort | Abschlußdatum der Recherche | Prüfer |
|---|---|---|
| DEN HAAG | 06 SEPTEMBER 1989 | CLASEN M.P. |